# EUROPÄISCHE PATENTSCHRIFT

(11) **EP 0 976 629 B1**
(45) Veröffentlichungstag und Bekanntmachung des Hinweises auf die Patenterteilung: **03.05.2006**
(21) Anmeldenummer: 99112225.0
(22) Anmeldetag: 25.06.1999
(51) Int. Cl.: B60T 8/00

(54) **Verfahren und Vorrichtung zur Anpassung der Bremsleistung an momentane Rad-Fahrbahn-Kraftschluss-Bedingungen**
Method and device for adapting the braking power to instantaneous wheel/road traction conditions
Procédé et dispositif pour l'adaptation de la performance de freinage à des conditions momentanées de roue-chaussée-adhérence

(30) Priorität: 29.07.1998 DE 19834167
(43) Veröffentlichungstag der Anmeldung: 02.02.2000
(73) Patentinhaber: Volkswagen Aktiengesellschaft, 38436 Wolfsburg (DE)
(72) Erfinder: Bastian, Andreas, Dr., 38114 Braunschweig (DE); Babbel, Eckhard, Dipl.-Ing., 38100 Braunschweig (DE)

(56) Entgegenhaltungen:
- EP-A- 0 392 164
- DE-A- 3 916 513
- DE-A- 4 410 299
- DE-A- 19 612 222
- US-A- 4 779 447
- PATENT ABSTRACTS OF JAPAN vol. 009, no. 249 (M-419), 5. Oktober 1985 (1985-10-05) & JP 60 099757 A (NIPPON DENSO KK), 3. Juni 1985 (1985-06-03)

## Beschreibung

Die Erfindung bezieht sich auf ein Bremssystem zur Anpassung der Bremsleistung an momentane Rad-Fahrbahn-Kraftschluß-Bedingungen mit einem Blocklerverhinderungs-System nach dem Oberbegriff von Patentanspruch 1 sowie weiterhin auf ein Verfahren und eine Vorrichtung zur Anpassung der Bremsleistung an momentane Rad-Fahrbahn-Kraftschluß-Bedingungen nach dem Oberbegriff von Patentanspruch 6.

Bremsanlagen für Kraftfahrzeuge bestehen im wesentlichen aus einer Betätigungseinrichtung, einem Reservoir, einer Übertragungseinrichtung, Zusatzeinrichtungen sowie der eigentlichen Radbremse. Bei der Betätigung der Betätigungseinrichtung wird über die Übertragungseinrichtung ein Arbeitsfluid von dem Reservoir zu dem Bramszylincler der Radbremse übertragen und die Bewegungsenergie des Rades in Wärme etc. umgewandelt. Wird die Betätigung zu stark ausgeführt, steigt der Bremsdruck an der Radbremse stark an, mit der Folge, daß das Rad blockiert. Da dadurch die Rollreibung des Rades in eine Gleitreibung übergeht, die sehr viel geringer ist als erstere, läßt die Bremswirkung bei blockierendem Rad stark nach gegenüber einem gebremst rollenden Rad.

Um das Blockieren des Rades zu verhindern, wurden Blockierverhinderungs-Systeme entwickelt. Der prinzipielle Bremsvorgang mit einem Blockierverhinderungs-System läuft so ab, daß beim Anbremsen der Bremsdruck gesteigert wird, so daß der Bremsschlupf zunimmt und im höchsten Punkt der Kraftschluß-Schlupfkurve die Grenze zwischen stabilem und instabilem Bereich erreicht. Ein Raddrehzahlsensor überwacht, daß das Rad nicht blockiert bzw. sich nicht ein zu hoher Schlupfwert beim Bremsen ergibt. Droht ein Blockieren des Rades oder ist der Schlupfwert bereits sehr hoch, wird die Zufuhr von Energie zur Radbremse unterbrochen, so daß der Bremsdruck sinkt. Ist die Gefahr eines Blockierens gebannt, kann der Bremsdruck wieder aufgebaut werden.

Moderne Blockierverhinderungs-Systeme haben einen hohen technischen Stand erreicht und verringern bei trockener Straße im Durchschnitt den erforderlichen Bremsweg gegenüber einer Bremsung ohne Blockierverhinderung beträchtlich. Ein solches Verfahren zum Ermitteln einer optimalen mittleren Bremsverzögerung eines Kraftfahrzeuges bei blocklergeichützten Bremsanlagen ist aus DE 39 16 513 bekannt. Bei diesem Verfahren nach dem Stand der Technik wird der Haftreibungskoeffizient zwischen den Reifen und dem Boden permanent ermittelt und eine Fahrzeugreferenzgeschwindigkeit grob ermittelt. Anhand der Fahrzeugreferenzgeschwindigkeit werden die idealen Schlupfwerte für alle Räder eingestellt und die idealen Radgeschwindigkeiten ermittelt. Radgeschwindigkeitseinbrüche werden mit Hilfe der idealen Radgeschwindigkeiten durch einen Proportionalregler ausgeregelt.

Bei bestimmten Fahrbahnzuständen (loser Schnee, Sand, Geröll) sind die Bremswege mit herkömmlicher Bloclcierverhihderung allerdings deutlich länger als ohne Blockierverhinderungs-System, da bei diesen Fahrbahnzuständen hohe Bremskräfte nur bei hohen Schlupfwerten bzw. blockiertem Rad übertragen werden können. Das herkömmliche Blocklerverhinderungs-System hingegen stellt stets niedrige Schlupfwerte ein und erreicht so nicht den technisch möglichen Bremsweg.

Dies wird in der DE 39 16 513 A1 dadurch gewährleistet, daß die Regelung des Antiblocklersystems bei hohen Reibwerten sich sukzessive an ein Reibmaximum herantastet. Bei glatten Fahrbahnverhättnissen existiert ein solches Maximum bei geringen Schlupfwerten nicht, so daß dann über eine Grenzwertregelung des Herantasten an höhere Schlupfwerte abgebrochen wird. Die Regelung des Antiblocklersystems erfolgt über die Radgeschwindigkeiten. Nach der Lehre der DE 39 16 513 A1 bleibt diese Regelung für alle Fahrbahnzustände in Kraft.

In der DE 35 00 745 C2 wird die Verringerung des Bremsdrucks bei glatten Fahrbahnzuständen vorgeschlagen. Praktisch bedeutet dies, dass eine Druckmodulation zur Regelung des Schlupfes auf einem geringen Druckniveau stattfinden soll. Damit lässt sich das Fahrzeug zwar gut stabilisieren, die Bremswege sind jedoch verhältnisnmäßig lang. Wird das Druckniveau abgesenkt, ist es nicht möglich, hohe Schlupfwerte zu erreichen. Weiterhin wird in der DE 35 00 745 C2 mit einem sogenannten Reibbeiwert-Erkennungsschaltkreis zwischen einem hohen Reibwert und einem niedrigen Reibwert unterschieden, um für die Bremsdruckmodulation eine Referenzgeschwindigkeit mit steilere oder geringer Steigung zu wählen. Die Bremsregelung des Antiblockiersystems ist stets im Betrieb.

Es ist Aufgabe der vorliegenden Erfindung, ein Blockierverhinderungs-Bremssystem so weiterzuentwickeln, daß der erforderliche Bremsweg gegenüber dem Stand der Technik weiter und unter vielfältigeren Fahrbedingungen verkürzt werden kann.

Diese Aufgabe wird erfindungsgemäß gelöst durch ein Bremssystem nach Anspruch 1 sowie ein Bremsverfahren nach Anspruch 6. Bevorzugte Ausführungsformen der Erfindung sind Gegenstand der abhängigen Unteransprüche.

Der Erfindung liegt die Erkenntnis zugrunde, daß bei Fahrbahn-Kraftschlußbedingungen, bei denen das Reibwertmaximum bei hohen Schlupfwerten liegt, ein besseres Bremsverhalten erreicht wird, wenn das Blocklerverhinderungs-System deaktiviert wird. Dazu wird erfindungsgemäß die momentane Fahrbahn-Kraftschlußbedingung analysiert und durch ein übergeordnetes System entschieden, ob das Blockierverhinderungs-System aktiviert werden soll oder die Bremsung mit blockierten Rädern bzw. Rädern mit hohem Schlupf durchgeführt werden soll. Eingangsgröße für das übergeordnete System ist erfindungsgemäß das Ausgangssignal einer Erkennungseinheit, die die Analyse der Fahrbahn- Kraftschlußbedingung durchführt. Die Erkennung der Fahrbahn-Kraftschlußbedingung kann dabei auf verschiedene Arten erfolgen.

Das erfindungsgemäße Bremssystem zur Anpassung der Bremsleistung an momentane Rad-Fahrbahn-Kraftschluß-Bedingungen mit einem Blockierverhinderungs-System, das eine Betätigungseinrichtung zum Erzeugen eines Bremssignals, ein Reservoir und eine Radbremse, die über ein Ventil mit dem Reservoir verbunden ist, das je nach Größe des Bremssignals öffnet, sowie einen Raddrehzahlsensor und eine Steuerungseinheit umfaßt, die ein Sensorsignal von dem Raddrehzahlsensor empfängt und ein Steuerungssignal zum Schließen des Ventils an das Ventil ausgibt, so daß der Bremsdruck unabhängig von dem Bremssignal unterhalb eines Wertes bleibt, bei dem das Rad blockiert, ist gekennzeichnet durch eine Erkennungseinheit zum Erkennen des Verlaufs des Rad-Fahrbahn-Kraftschlusses in Abhängigkeit von dem Schlupf, die ein Erkennungssignal ausgibt, und eine Schalteinheit, die das Erkennungssignal empfängt und die eine Erhöhung des in dem Blockierverhinderungs-System eingestellten maximal zugelassenen Schlupfes in Abhängigkeit von dem Erkennungssignal durchführt, wenn das Erkennungssignal einen vorgegebenen Wertebereich verläßt

Vorzugsweise empfängt die Erkennungseinheit ein erstes und ein zweites Sensorsignal von zwei Radsensoren und umfaßt einen ersten Addierer, der die Differenz zwischen der Drehzahl eines angetriebenen und eines nicht angetriebenen Rades erfaßt und daraus den Schlupf der Räder und deren Reibwert µ bzw. den Rad-Fahrbahn-Kraftsctiluß bestimmt.

Bei einer weiteren bevorzugten Ausführungsform umfaßt die Erkennungseinheit einen zweiten Addierer, der die Differenz zwischen der Drehzahl eines linken und eines rechten Rades erfaßt, und einen Gierratensensor, der die Gierbewegung des Fahrzeugs erfaßt. Um eine Verfälschung des Meßergebnisses bei dieser Ausführungsform durch eine mit dem Bremsen gleichzeitige erfolgende Lenkbewegung durch den Fahrer auszuschließen, wird bei einer Weiterentwicklung dieser Ausführungsform neben der Giergeschwindigkeit zusätzlich der Lenkradwinkel erfaßt.

In einer besonders bevorzugten Ausführungsform umfaßt die Erkennungseinheit einen Maximalwertdetektor, der den Bremsdruck erfaßt und abspeichert, bei dem das Rad zum Blockieren neigt.

Das erfindungsgemäße Verfahren zur Anpassung der Bremsleistung an momentane Rad-Fahrbahn-Kraftschluß-Bedingungen bei einem Kraftfahrzeug mit einem Bremssystem, das die Schritte umfaßt: Übertragen eines Bremssignals von einer Betätigungseinrichtung an ein Bremsventil zum Öffnen des Bremsventils je nach Größe des Bremssignals, Erfassen der Raddrehzahl jedes Rades des Kraftfahrzeugs, Schließen des Bremsventils, wenn die Drehbeschleunigung des Rades einen vorgegebenen Grenzwert überschreitet, so daß ein Blockieren des Rades vermieden wird, ist gekennzeichnet durch die Schritte Ermitteln des Verlaufs des Rad-Fahrbahn-Kraftschlusses in Abhängigkeit von dem Schlupf durch eine Erkennungseinheit und Ausgeben eines Kraftschluß-Signals an eine Schalteinheit, Erhöhen des in dem Blockierverhinderungs-System eingestellten maximal zugelassenen Schlupfes in Abhängigkeit von dem Erkennungssignal durch die Schalteinheit, wenn das Kraftschluß-Signal einen vorgegebenen Wertebereich verläßt.

Insbesondere erfolgt das Ermitteln des Rad-Fahrbahn-Kraftschlusses in Abhängigkeit von dem Schlupf durch Ermitteln der Steigung des Antriebsmoment-Schlupf-Verlaufs.

In einer weiteren Ausführungsform erfolgt das Ermitteln des Rad-Fahrbahn-Kraftschlusses in Abhängigkeit von dem Schlupf bei einer Bremsung durch Ermitteln des Bremsdruckes, bei dem das Rad blockiert und/oder das Blockierverhinderungs-System aktiviert wird.

In einer weiteren Variante des erfindungsgemäßen Verfahrens erfolgt das Ermitteln des Rad-Fahrbahn-Kraftschlusses in Abhängigkeit von dem Schlupf bei einer Bremsung durch Ermitteln der Gierbewegung des Fahrzeuges bei seitlich unterschiedlicher Bremsung. Zusätzlich kann dabei der Einschlagwinkel der Lenkrades erfaßt werden.

Weitere Merkmale und Vorteile der Erfindung ergeben sich aus der folgenden Beschreibung von zeichnerisch dargestellten Ausführungsbeispielen.
Fig. 1 zeigt eine erste Ausführungsform der Erfindung.
Fig. 2 zeigt einen Regelkreis eines herkömmlichen Blockierverhinderungs-Systems für ein einzelnes Rad.
Fig. 3 zeigt eine Übersicht über einen herkömmlichen Regelkreis in einem Fahrzeug.
Fig. 4 zeigt eine Übersicht einer Ausführungsform des erfindungsgemäßen Regelkreises in einem Fahrzeug.

In den Darstellungen der Regelkreise sind Leitungen des Bremssystems als fette Linien, Steuerleitungen als dünne Linien, Meßleitungen als gestrichelte Linien dargestellt. Bei den Steuerleitungen bedeutet ein kleiner Querstrich, daß die Steuerleitung ein mehradriger Bus ist, Punkte an sich kreuzenden dünnen Linien entsprechen Verzweigungspunkten der Steuerleitungen. Die Antriebsstränge vom Motor zu den angetriebenen Rädern sind als Doppellinien dargestellt.

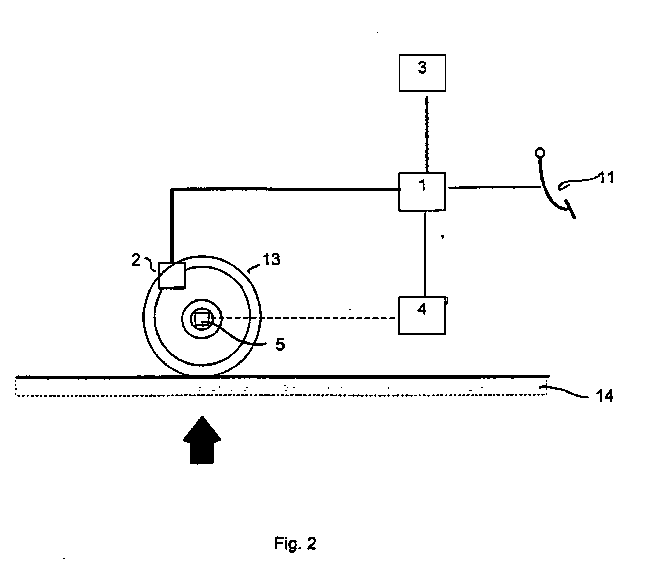

Fig. 2 zeigt den Regelkreis eines heute gebräuchlichen Blockierverhinderungs-Systems. Durch eine Betätigungseinrichtung 11 wie ein Bremspedal wird eine Führungsgröße an ein (Magnet-) Ventil 1 ausgegeben. Dieses Ventil 1 öffnet zunächst je nach Größe der Führungsgröße von der Betätigungseinrichtung 11, so daß ein Arbeitsfluid aus einem mit Druck beaufschlagtem Reservoir 3 zu einem Bremszylinder 2 an einem Rad 13 strömt und somit einen entsprechenden Druck auf die Bremse ausübt. (Das Rad ist in der Darstellung von Fig. 2 nicht angetrieben, die Erläuterung des Blockierverhinderungs-Systems gilt jedoch sowohl für angetriebene wie auch nicht angetriebene Räder.) Ein Raddrehzahlsensor 5 erfaßt die Drehzahl des Rades 13, gibt eine entsprechende Regelgröße aus und überwacht damit den Bewegungszustand des Rades. Tritt an einem der Räder eine Blockierneigung auf, so gibt ein Regler 4, der sich hinter dem Radsensor 5 befindet, je nach der Regelgröße einen Befehl an das Magnetventil 1 aus, der bewirkt, daß das Ventil 1 wenigstens teilweise oder ganz schließt: Der Druck bzw. der Aufbau des Druckes an der Radbremse wird so lange unterbrochen, bis die Blockiergefahr beseitigt ist. Damit wenigstens annähernd ein optimaler Bremsdruck erreicht wird und das Rad nicht unterbremst wird, wird der Bremsdruck stufenweise erneut aufgebaut: Während der Bremsregelung muß immer wieder die Stabilität und die Instabilität der Radbewegung erkannt werden und eine zyklische Folge von Druckaufbau-, Druckhalte- und Druckabbauphasen durchlaufen werden.

Mit diesem abwechselnden Öffnen und Schließen des Bremsventils 1 wird erreicht, daß der Schlupf des Rades bei den heute üblichen Systemen Werte zwischen etwa 10% und 20% nicht überschreitet. Störgröße im Regelkreis dieses Blockierverhinderungs-Systems ist unter anderem die Änderung des Kraftschlusses zwischen Reifen und Fahrbahn bei unterschiedlichen Fahrbahnoberflächen und veränderten Radlasten, Kurvenfahrten etc.. In Fig. 2 ist diese Störgröße angedeutet durch einen fett gezeichneten Pfeil in Richtung Berührungsfläche zwischen Rad (Reifen) 12 und Fahrbahn 14. Damit kann unter besonderen Umständen, die die Fahrbahn betreffen, eine Einstellung des maximalen Schlupfes auf einen relativ niedrigen Wert zu einer Verlängerung des Bremsweges führen. Erfindungsgemäß wird daher der von dem System zugelassene Schlupf je nach momentanen Kraftschlußbedingungen eingestellt.

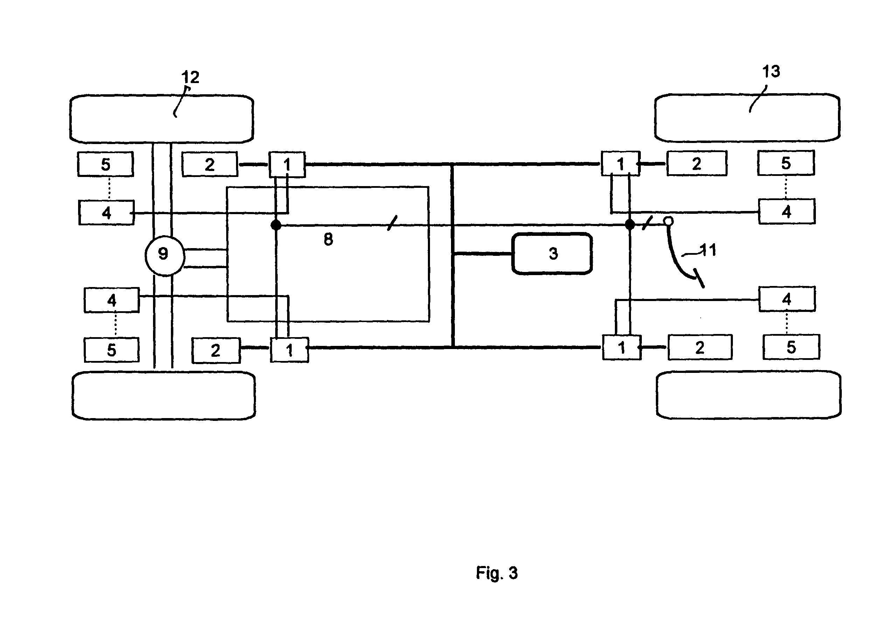

Eine Übersicht über das gesamte Bremssystem mit Blockierverhinderung nach dem Stand der Technik in einem Fahrzeug ist in Fig. 3 dargestellt. In dem Fahrzeug befindet sich ein Motor 8, der über einen Antriebsstrang mit einem Differentialgetriebe 9 zwei Räder 12 des Fahrzeugs antreibt. Die beiden anderen Räder 13 sind in dem Fahrzeug in Fig. 3 der Einfachheit halber als nicht angetrieben dargestellt. Jedes Rad 12 und 13 kann durch Betätigen des Betätigungseinrichtung 11 über den Bremskreis mit Reservoir 3, Ventil 1 und Bremszylinder 2 abgebremst werden. Damit es nicht zum Blockieren der Räder kommt, verfügt jedes der Räder 12 und 13 über einen Raddrehzahlsensor 5, der die Drehzahl des jeweiligen Rades an einen Regler 4 ausgibt, der je nach Blockierneigung das Ventil 1 öffnet - unabhängig von der Führungsgröße von der Betätigungseinrichtung 11. Somit stellt die Betätigungseinrichtung 11, das Ventil 1 mit Bremszylinder 2, der Drehzahlsensor 5 und der Regler 4 einen Regelkreis dar, der das Blockieren des Rades beim Bremsen unterbindet.

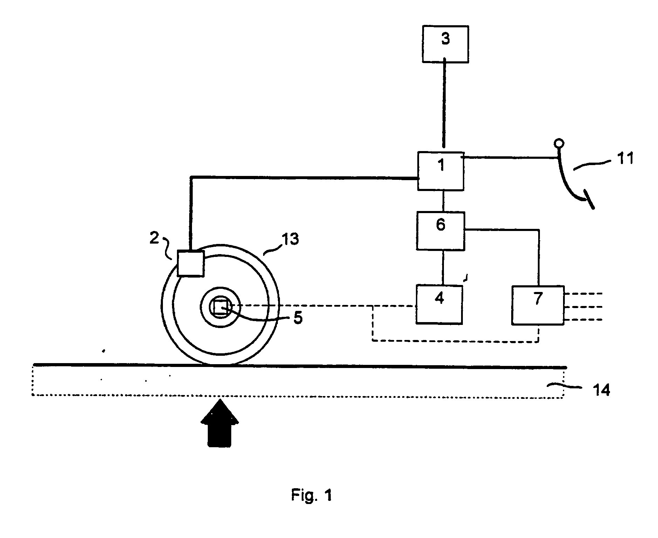

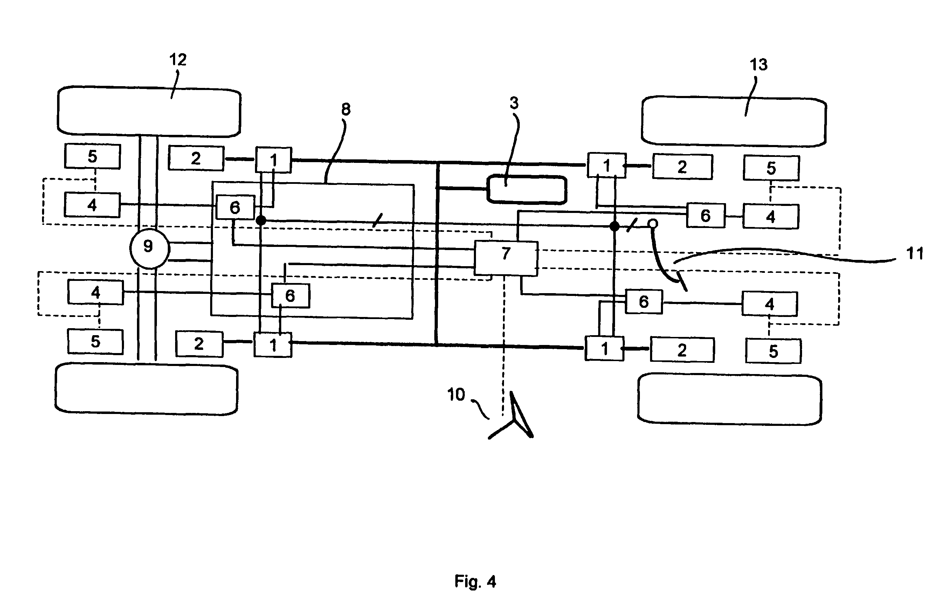

Das erfindungsgemäße Blockierverhinderungs-System ist in Fig. 1 und in Fig. 4 dargestellt. Es umfaßt wie in Fig. 1 gezeigt neben den bereits in Fig. 2 beschriebenen Komponenten eine Schalteinheit 6, die in der dargestellten Ausführungsform zwischen Regler 4 und Ventil 1 geschaltet ist. Diese Schalteinheit 6 blockiert den Befehl von dem Regler, das Ventil 1 zu schließen, wenn die Fahrbahn- Kaftschlußbedingungen eine Bremsung mit Blockierverhinderungs-System nicht ratsam erscheinen lassen, d. h. das Öffnen des Bremsventils gegen das Ausgangssignal des Reglers 4 zuzulassen, wenn das Kraftschluß-Signal einen vorgegebenen Wertebereich verläßt. Die Schalteinheit erhält den Befehl, die Verbindung zwischen Regler 4 und Ventil 1 zu unterbrechen bzw. das Steuersignal von dem Regler 4 an das Ventil 1 mit einem Offset zu versehen, der von dem Ausgangssignal einer Erkennungseinheit 7 abhängt. Die Erkennungseinheit 7 erfaßt in der gezeigten Ausführungsform das Signal von mehreren Radsensoren 5. Ob zum Erkennen des Kraftschlusses zwischen Fahrbahn und Rad die Information von allen Rädern oder nur von einem Rad benötigt wird, hängt von dem Verfahren ab, mit dem der Kraftschluß ermittelt wird.

Mit dieser Zwischenschaltung der Schalteinheit 6, die durch die Erkennungseinheit 7 gesteuert wird, ist es möglich, immer den optimalen Bremsdruck an den Radbremsen zu erhalten. So kann der Bremsdruck über den von der Blockierverhinderungs-Schaltung eingestellte erhöht werden, wenn z. B. das Fahrzeug auf einer rutschigen Oberfläche fährt, wie z. B. Split auf Asphalt. Kommt es in dieser Situation zu einer Bremsung, würde aufgrund des Blockierens der Räder bereits bei relativ geringem Bremsdruck die Blockierverhinderungs-Schaltung bereits bei geringem Bremsdruck das Ventil 1 sperren, so daß die Räder zwar nicht blockieren, aber die Verzögerung des Fahrzeugs auch sehr gering bleibt. Der Bremsweg wäre dementsprechend länger. Bei der erfindungsgemäßen Bremssystem dagegen stellt die Erkennungseinheit 7 bereits bei der Fahrt des Fahrzeugs oder beim Abbremsen die Kraftschlußbedingung fest. Sie weist daher in dem Beispiel des Splits auf Asphalt oder auch bei Geröll die Schalteinheit 6 an, ein Schließen des Ventils zu verhindern, so daß ein höherer Bremsdruck aufgebaut werden kann. Dies bedeutet, daß das Rad einen größeren Schlupf aufweist. Der größere Schlupf führt dazu, daß das Rad den Split oder das Geröll in höherem Maße vor sich herschiebt, so daß sich eine Anhäufung von Material vor dem Rad bildet, die zur Verzögerung des Fahrzeugs beiträgt und die Bremswirkung insgesamt erhöht.

In der Übersicht ist das in einem Fahrzeug eingebaute erfindungsgemäße Bremssystem in Fig. 4 gezeigt. Das Fahrzeug wird durch einen Motor über einen Antriebsstrang mit Differentialgetriebe 9 und die beiden Räder 12 angetrieben. Die Erfindung beschränkt sich aber nicht auf zweiradangetriebene Fahrzeuge, sondern kann auch Anwendung finden bei vierradangetriebenen Fahrzeugen. Wie bereits in Zusammenhang mit Fig. 1 erläutert ist zwischen dem Regler 4 des Blockierverhinderungs-Systems und dem Ventil 1 bei jedem Rad 12 oder 13 eine Schalteinheit 6 vorgesehen, die von der Erkennungseinheit 7 gesteuert wird. Als Eingangsgröße kann die Erkennungseinheit 7 in der dargestellten Ausführungsform neben dem Signal der Raddrehzahlsensoren 5 auch ein Signal von einem Lenkradsensor 10 empfangen, der den Einschlagwinkel des Lenkrades erfaßt. Aus diesen Eingangssignalen ermittelt die Erkennungseinheit 7 die Kraftschlußbedingungen, an die die Bremsleistung angepaßt wird.

Im folgenden werden Ausführungsformen des erfindungsgemäßen Verfahrens zum Erkennen der momentanen Kraftschlußbedingung erläutert. In einer ersten Ausführungsform erfolgt die Erkennung aus der Anfangssteigung der Umfangskraft-Schlupf-Kennlinie oder mit anderen Worten durch das Ermitteln des Rad-Fahrbahn-Kraftschlusses durch Ermitteln der Steigung des Antriebsmoment-Schlupf-Verlaufs. Dabei werden die unterschiedlichen physikalischen Eigenschaften der Fahrbahn- Kraftschlußbedingungen ausgenutzt, die durch entsprechende unterschiedliche Anfangssteigungen der Umfangskraft-Schlupfkennlinie gekennzeichnet sind. Da die Anfangssteigung der Fahrbahn-Kraftschlußbedingungen bei kritischer Fahrbahnbeschaffenheit wie Schnee, Geröll, Split viel geringer als in den Fällen ist, die für den Einsatz von Blockierverhinderungs-Systemen geeignet sind, wird dies zur Erkennung genutzt. Zur Bestimmung der Anfangssteigung der Kraftschlußbedingung wird in einer Ausführungsform die Drehzahldifferenz zwischen einem angetriebenen und einem nicht angetriebenen Rad 12 bzw. 13 durch die Erkennungseinheit 7 bestimmt. Damit läßt sich der Schlupf und der Kraftschluß bereits während der Fahrt bestimmen. Je nach ermittelten Kraftschluß gibt die Erkennungseinheit 7 ein Vorgabesignal an die Schalteinheit 6 aus, ob und gegebenenfalls in welchem Maße das Ventil 1 gegen den Schließbefehl des Reglers 4 geöffnet bleibt.

Für die Implementierung dieses Verfahrens umfaßt die Erkennungseinheit 7 einen ersten (nicht dargestellten) Addierer, der die Differenz zwischen der Drehzahl des angetriebenen 12 und des nicht angetriebenen Rades 13 erfaßt und daraus den Schlupf der Räder 12 und 13 bestimmt.

In einer weiteren Ausführungsform erfolgt die Erkennung der Kraftschlußbedingungen über denjenigen Bremsdruck, bei dem das Rad "abstürzt" und/oder die Blockierverhinderung einsetzt, d. h. es wird das Überschreiten eines vorgegebenen Wertes der negativen Drehbeschleunigung erfaßt. Unter negativer Drehbeschleunigung wird hier die Abnahme der Drehzahl des Rades mit der Zeit verstanden. Bei diesem Verfahren wird der Bremsdruck an einem oder mehreren Rädern 12, 13 in bestimmten Schritten erhöht und bei dem Überschreiten des vorgegebenen Wertes einer negativen Drehbeschleunigung gespeichert. Dabei kann der Bremsdruck direkt mit Sensoren an den Bremszylindern gemessen werden oder mittels eines Modells bestimmt werden. Das Modell besteht vorzugsweise darin, daß aus den Öffnungs- bzw. Schließzeiten und -frequenzen des Ventils 1 unter Berücksichtigung des Druckes in dem Reservoir 3 der sich aufbauende Druck im Bremszylinder 2 abgeschätzt wird. Zu der Erfassung des kritischen Bremsdruckes durch einen Sensor umfaßt die Erkennungseinheit 7 einen (nicht dargestellten) Maximalwertdetektor, der den Bremsdruck erfaßt, bei dem das Rad zum Blockieren neigt, und den Maximalwert für den späteren Vergleich mit dem Vorgabedruck in dem Blockierverhinderungs-System abspeichert (sample and hold).

Die Abschätzung des aufgebauten Bremsdruckes in dem Bremszylinder 2 kann außer durch konventionelle Algorithmen über Fuzzy-Logik-Regeln erfolgen bzw. in einem neuronalen Netz "trainiert" werden.

Der so erfaßte oder ermittelte Bremsdruck wird mit dem Bremsdruck verglichen, auf den das Blockierverhinderungs-System eingestellt ist. Ist der erfaßte Bremsdruck deutlich höher als der im Blockierverhinderungs-System gespeicherte Bremsdruck, so liegt ein Fahrbahnzustand vor, bei dem eine Bremsung mit höheren Schlupfwerten besser ist. Je nach dem ermittelten Schlupfwert gibt die Erkennungseinheit 7 daher ein Vorgabesignal an die Schalteinheit 6 aus, ob und gegebenenfalls in welchem Maße das Ventil 1 gegen den Schließbefehl des Reglers 4 geöffnet bleibt.

In einer weiteren bevorzugten Ausführungsform der Erfindung erfolgt die Erkennung des Kraftschlusses durch eine einseitige Bremskrafterhöhung bzw. -erniedrigung und dem Erfassen der daraus resultierenden Giergeschwindigkeit des Fahrzeugs. Der Bremsdruck wird dazu an einem oder beiden Rädern 12 und/oder 13 auf einer Seite des Fahrzeugs in bestimmten Schritten erhöht bzw. erniedrigt. Dadurch "zieht" das Fahrzeug zu der Seite, auf der der Bremsdruck höher ist und führt eine Gierbewegung aus. Die Giergeschwindigkeit wird durch einen eigenen Sensor im Fahrzeug gemessen. Aus der Gierrate und dem momentanen Bremsdruck wird der Schlupf der Räder bestimmt und wiederum mit dem vorgegebenen Schlupfwert des Blockierverhinderungs-System verglichen.

Für diese Art der Erkennung umfaßt die Erkennungseinheit 7 einen zweiten (nicht dargestellten) Addierer, der die Differenz zwischen der Drehzahl eines linken und eines rechten Rades erfaßt, und einen Gierratensensor, der die Gierbewegung des Fahrzeugs erfaßt.

Damit die Ermittlung der Giergeschwindigkeit nicht dadurch beeinträchtigt wird, daß sich das Fahrzeug in einer Kurvenfahrt befindet, wird die Giergeschwindigkeit vor und nach der unsymmetrischen Bremsung erfaßt. Besteht ein signifikanter Unterschied zwischen beiden Giergeschwindigkeiten, so liegt der Fahrbahnzustand vor, bei dem das Blockierverhinderungs-System überstimmt wird.

Zur weiteren Verbesserung der Erkennung des Fahrbahnzustandes durch eine einseitige Bremskrafterhöhung bzw. -erniedrigung und dem Vergleich der Giergeschwindigkeit wird außerdem der Lenkradwinkel und die Fahrgeschwindigkeit berücksichtigt. Damit werden auch Einflüsse auf die Bestimmung der Gierbewegung von im Verlauf der Bremsung erfolgten Lenkbewegungen eliminiert. Dazu umfaßt die Erkennungseinheit 7 einen Lenksensor, der den Einschlagwinkel eines Lenkrads 10 erfaßt.

Während die erste Ausführungsform der Erkennung des Fahrbahnzustandes bereits während der Fahrt erfolgt, beruhen die weiteren Ausführungsformen auf Bremssituationen. Es können somit die Erkennungsverfahren unabhängig voneinander oder in Kombination miteinander eingesetzt werden.

Zum Erreichen des kürzestmöglichen Bremswegs bei Fahrbahn-Kraftschlußbedingungen, bei denen das Reibwertmaximum bei hohen Schlupfwerten liegt, wird erfindungsgemäß das konventionelle Blockierverhinderungs-System überstimmt, wenn die Fahrbahn-Kraftschlußbedingungen mit Hilfe der oben angeführten Verfahren erkannt worden sind. Mit anderen Worten, es wird ein gegenüber dem Blockierverhinderungs-System erhöhter Sollschlupfwert eingestellt, wobei sich die Höhe der Sollschlupfwerte auch nach dem Fahrzustand (Kurvenfahrt usw.) richten kann und bis zu 50% (gegenüber ca. 10% beim Stand der Technik) betragen kann.

Die Bestimmung des momentanen Bremsdruckes und des Schlupfes sowie der Vergleich gemessener Werte mit vorgegebenen Werten erfolgt vorzugsweise unter Zuhilfenahme von Fuzzy-Logik-Regeln. Ebenso können neuronale Netze anstatt konventioneller Algorithmen eingesetzt werden.

Die Erfindung wurde mit einer Schalteinheit 6 beschrieben, die zwischen den Regler 4 und das Ventil 1 geschaltet ist. Es ist aber für den Fachmann unmittelbar einsichtig, daß die Schalteinheit 6 statt zum Manipulieren des Ausgangssignals des Reglers 4 an das Ventil 1 durch ein Offset-Signal oder durch Unterbrechen der Steuerleitung zwischen Regler 4 und Ventil 1 auch ein Signal erzeugen kann, das als Eingangsgröße für den Regler 4 dient, so daß dieser direkt den Verlauf des Rad-Fahrbahn-Kraftschlusses in Abhängigkeit von dem Schlupf bei der Regelung als Störgröße berücksichtigt. Dann wird die Schalteinheit 6 nicht zwischen Regler 4 und Ventil 1 angeordnet, sondern ist unabhängig und kann auch in den Regler 4 oder die Erkennungseinheit 7 integriert werden.

Damit wird durch die Erfindung automatisch und unabhängig von der Fahrbahnbeschaffenheit eine optimale Bremsleistung bereitgestellt.

### BEZUGSZEICHENLISTE

- 1: Ventil, Magnetventil
- 2: Bremszylinder
- 3: Reservoir
- 4: Regler
- 5: Raddrehzahlsensor
- 6: Schalteinheit
- 7: Erkennungseinheit
- 8: Motor
- 9: Differentialgetriebe
- 10: Lenkrad
- 11: Betätigungseinrichtung
- 12: angetriebenes Rad
- 13: nicht angetriebenes Rad
- 14: Fahrbahn

## Patentansprüche

1. Bremssystem zur Anpassung der Bremsleistung an momentane Rad-Fahrbahn-Kraftschluß-Bedingungen mit einem Blockierverhlnderungs-System, das eine Betätigungseinrichtung (11) zum' Erzeugen eines Bremsslgnals, ein Reservoir (3) und eine Radbremse (2), die über ein Ventil (1) mit dem Reservoir (3) verbunden ist, das je nach Größe des Bremssignals öffnet, sowie einen Raddrehzahlsensor (5) und eine Steuerungseinheit (4) umfaßt, die ein Sensorsignal von dem Raddrehzahlsensor (5) empfängt und ein Steuerungssignal zum Schließen des Ventils (1) an das Ventil (1) ausgibt, so daß der Bremsdruck unabhängig von dem Bremssignal unterhalb eines Wertes bleibt, bei dem das Rad (12, 13) blockiert, wobei eine Erkennungseinheit (7) zum Erkennen des Verlaufs des Rad-Fahrbahn-Kraftschlusses in Abhängigkeit von dem Schlupf vorgesehen ist, die zwischen einem Fahrbahnzustand mit niedrigem Reibwert und einem Fahrbahnzustand mit hohem Reibwert unterscheidet und ein entsprechendes Erkennungssignal an eine Schalteinheit (6) ausgibt, **dadurch gekennzeichnet, daß** eine Schalteinheit (6) vorgesehen ist, die das Erkennungssignal empfängt und bei einem hohen Reibwert eine Aktivierung des Blockierverhinderungs-Systems mit einer Regelung des Bremsdrucks gestattet, bei einem niedrigen. Reibwert hingegen in einen Obersteuerungszustand schaltet, in dem die Regelung durch das Blockierverhinderungs-System außer Kraft gesetzt ist, wobei im Übersteuerungszustand ein gegenüber dem maximal zugelassenen Schlupf des Blocklerverhinderungs-Systems erhöhter Sollschlupfwert mit zugleich erhöhtem Bremsdruck eingestellt wird.

2. Bremssystem nach Anspruch 1,
**dadurch gekennzeichnet, daß**
die Erkennungseinheit (7) ein erstes und ein zweites Sensorsignal von zwei Radsensoren (5) empfängt und einen ersten Addierer umfaßt, der die Differenz zwischen der Drehzahl eines angetriebenen (12) und eines nicht angetriebenen (13) Rades erfaßt und daraus den Schlupf der Räder (12, 13) und deren Rad-Fahrbahn-Kraftschluß bestimmt.

3. Bremssystem nach Anspruch 1,
**dadurch gekennzeichnet, daß**
die Erkennungseinheit (7) einen zweiten Addierer, der die Differenz zwischen der Drehzahl eines linken und eines rechten Rades erfaßt, und einen Gierratensensor, der die Gierbewegung des Fahrzeugs erfaßt, umfaßt und daraus den Rad-Fahrbahn-Kraftschluß bestimmt.

4. Bremssystem nach Anspruch 3,
**dadurch gekennzeichnet,daß**
die Erkennungseinheit (7) einen Lenksensor umfaßt, der den Lenkradwinkel (10) erfaßt.

5. Bremssystem nach Anspruch 1,
**dadurch gekennzeichnet, daß**
die Erkennungseinheit (7) einen Maximalwertdetektor umfaßt, der den Bremsdruck erfaßt, bei dem das Rad zum Blockieren neigt.

6. Verfahren zur Anpassung der Bremsleistung an momentane Rad-Fahrbahn-Kraftschluß-Bedingungen bel einem Kraftfahrzeug mit einem Bremssystem nach einem der vorangehende Ansprüche, das die Schritte umfaßt:
Übertragen eines Bremssignals von einer Betätigungseinrichtung (11) an ein Bremsventil (1) zum Öffnen des Bremsventils (1) je nach Größe des Bremssignals,
Erfassen der Raddrehzahl jedes Rades (12, 13) des Kraftfahrzeugs,
Schließen des Bremsventils (1), wenn die Drehbeschleunigung des Rades (12, 13) einen vorgegebenen Grenzwert überschreitet, so daß ein Blockieren des Rades vermieden wird, Ermitteln des Verlaufs des Rad-Fahrbahn-Kraftschlusses in Abhängigkeit von dem Schlupf durch eine Erkennungseinheit (7), diezwischen einem Fahrbahnzustand mit niedrigem Reibwert und einem Fahrbahnzustand mit hohem Reibwart unterscheidet, und Ausgeben eines Kraftschluß-Signals an eine Schalteinheit (6), **dadurch gekennzeichnet daß**
die Schalteinheit (6) in Abhängigkeit des Kraftschluß-Signals bei einem hohen Reibwert eine Aktivierung des Blockierverhinderungs-Systems mit einer Regelung des Bremsdrucks gestattet, bei einem niedrigen Reibwert hingegen in einen Übersteuerungszustand schaltet, in dem die Regelung durch das Blockierverhinderungs-System außer Kraft gesetzt ist, wobei im Übersteuerungszustand ein gegenüber dem maximal zugelassenen Schlupf des Blockierverhinderungs-Systems erhöhter Sollschlupfwert mit zugleich erhöhtem Bremsdruck eingestellt wird.

7. Verfahren nach Anspruch 6, **dadurch gekennzeichnet, daß** das Ermitteln des Rad-Fahrbahn-Kraftschlusses durch Ermitteln der Steigung des Antriebsmoment-Schlupf-Verlaufs erfolgt.

8. Verfahren nach Anspruch 6 oder 7, **dadurch gekennzeichnet, daß** das Ermitteln des Rad-Fahrbahn-Kraftschlusses bei einer Bremsung durch Ermitteln des Bremsdruckes, bei dem das Rad blockiert und/oder das Blockierverhinderungs-System aktiviert wird, erfolgt.

9. Verfahren nach einem der Ansprüche 6 bis 8, **dadurch gekennzeichnet, daß** das Ermitteln des Rad-Fahrbahn-Kraftschlusses bei einer Bremsung durch Ermitteln der Gierbewegung des Fahrzeuges bei seitlich unterschiedlicher Bremsung erfolgt.

10. Verfahren nach Anspruch 9, **dadurch gekennzeichnet, daß** zum Ermitteln der Gierbewegung durch seitlich unterschiedliche Bremsung der Einschlagwinkel der Lenkrades erfaßt wird.

## Claims

1. Braking system for adapting the braking power to instantaneous wheel/road traction conditions having an anti-lock system which comprises an actuating device (11) for generating a braking signal, a reservoir (3) and a wheel brake (2), which is connected to the reservoir (3) by means of a valve (1), opens as a function of the magnitude of the braking signal, and also a wheel speed sensor (5) and a control unit (4) which receives a sensor signal from the wheel speed sensor (5) and outputs a control signal to the valve (1) to close the valve (1), so that, irrespective of the braking signal, the brake pressure remains below a value at which the wheel (12, 13) locks, a detection unit (7) for detecting the profile of the wheel/road traction as a function of slip being present which distinguishes between a road state with a low friction coefficient and a road state with a high friction coefficient and outputs a corresponding signal to a switching unit (6), **characterized in that** a switching unit (6) is provided which receives the detection signal and which, when there is a high friction coefficient, permits activation of the anti-lock system with closed-loop control of the brake pressure, but when there is a low friction coefficient, switches to an oversteer mode in which the closed-loop control by the anti-lock system is deactivated, a target slip value which is greater than the maximum permitted slip of the anti-lock system, with a simultaneously increased brake pressure, being set in the oversteer mode.

2. Braking system according to Claim 1,
**characterized in that**
the detection unit (7) receives a first sensor signal and a second sensor signal from two wheel sensors (5) and comprises a first adding device which measures the difference between the speed of a driven wheel (12) and that of a non-driven wheel (13) and determines from this the slip of the wheels (12, 13) and their wheel/road traction.

3. Braking system according to Claim 1,
**characterized in that**
the detection unit (7) comprises a second adding device which measures the difference between the speed of a left wheel and that of a right wheel, and a yaw rate sensor which measures the yaw movement of the vehicle, and determines from these the wheel/road traction.

4. Braking system according to Claim 3,
**characterized in that**
the detection unit (7) comprises a steering sensor which measures the steering wheel angle (10).

5. Braking system according to Claim 1,
**characterized in that**
the detection unit (7) comprises a maximum value detector which measures the brake pressure at which the wheel tends to lock.

6. Method for adapting the braking power to instantaneous wheel/road traction conditions in a motor vehicle having a braking system according to one of the preceding claims, which comprises the steps:
transmitting a braking signal from an actuating device (11) to a brake valve (1) to open the brake valve (1) as a function of the magnitude of the braking signal,
measuring the wheel speed of each wheel (12, 13) of the motor vehicle,
closing the brake valve (1) if the rotational acceleration of the wheel (12, 13) exceeds a predefined limit value, so that the wheel is prevented from locking,
determining the profile of the wheel/road traction as a function of the slip by means of a detection unit (7) which distinguishes between a road state with a low friction coefficient and a road state with a high friction coefficient, and
outputting a traction signal to a switching unit (6), **characterized in that**
when there is a high friction coefficient, the switching unit (6) permits, as a function of the traction signal, activation of the anti-lock system with closed-loop control of the brake pressure, but when there is a low friction coefficient, switches to an oversteer mode in which the closed-loop control by the anti-lock system is deactivated, a target slip value which is greater than the maximum permitted slip of the anti-lock system, with a simultaneously increased brake pressure, being set in the oversteer mode.

7. Method according to Claim 6, **characterized in that** the wheel/road traction is determined by determining the gradient of the drive-torque/slip profile.

8. Method according to Claim 6 or 7, **characterized in that** during braking, the wheel/road traction is determined by determining the brake pressure at which the wheel locks and/or the anti-lock system is activated.

9. Method according to one of Claims 6 to 8, **characterized in that** during braking, the wheel/road traction is determined by determining the yaw movement of the vehicle when laterally varied braking occurs.

10. Method according to Claim 9, **characterized in that** the steering lock angle of the steering wheel is measured in order to determine the yaw movement as a result of laterally varied braking.

## Revendications

1. Système de freinage pour l'adaptation de la performance de freinage à des conditions momentanées de roue-chaussée-adhérence avec un système antiblocage, qui comprend un dispositif d'actionnement (11) pour produire un signal de freinage, un réservoir (3) et un frein de roue (2), qui est raccordé au réservoir (3) via une soupape (1) qui s'ouvre selon la grandeur du signal de freinage, ainsi qu'un détecteur de vitesse de rotation de roue (5) et une unité de commande (4), qui reçoit un signal de détecteur provenant du détecteur de vitesse de rotation de roue (5) et envoie à la soupape (1) un signal de commande pour fermer la soupape (1), de telle manière que la pression de freinage reste, indépendamment du signal de freinage, inférieure à une valeur à laquelle la roue (12, 13) se bloque, dans lequel il est prévu une unité de reconnaissance (7) pour reconnaître l'évolution de la roue-chaussée-adhérence en fonction du patinage, qui distingue entre un état de chaussée avec un bas coefficient de frottement et un état de chaussée avec un haut coefficient de frottement et envoie un signal de reconnaissance correspondant à une unité de commutation (6), **caractérisé en ce qu'**il est prévu une unité de commutation (6) qui reçoit le signal de reconnaissance et, en cas de haut coefficient de frottement, autorise une activation du système antiblocage avec une régulation de la pression de freinage, en cas de bas coefficient de frottement, passe au contraire dans un état de surrégulation dans lequel la régulation est mise hors service par le système antiblocage, dans lequel, dans l'état de surrégulation, une valeur de consigne du patinage accrue par rapport au patinage maximal admissible du système antiblocage est réglée avec une pression de freinage simultanément accrue.

2. Système de freinage selon la revendication 1, **caractérisé en ce que** l'unité de reconnaissance (7) reçoit un premier et un deuxième signal de détecteur provenant de deux détecteurs de roue (5) et comprend un premier additionneur, qui détecte la différence entre la vitesse de rotation d'une roue entraînée (12) et la vitesse de rotation d'une roue non entraînée (13) et détermine à partir de celle-ci le patinage des roues (12, 13) et leur roue-chaussée-adhérence.

3. Système de freinage selon la revendication 1, **caractérisé en ce que** l'unité de reconnaissance (7) comprend un deuxième additionneur, qui détecte la différence entre la vitesse de rotation d'une roue gauche et d'une roue droite, et un détecteur de lacet, qui détecte le mouvement de lacet du véhicule, et détermine à partir de ceux-ci la roue-chaussée-adhérence.

4. Système de freinage selon la revendication 3, **caractérisé en ce que** l'unité de reconnaissance (7) comprend un détecteur de direction, qui détecte l'angle du volant de direction (10).

5. Système de freinage selon la revendication 1, **caractérisé en ce que** l'unité de reconnaissance (7) comprend un détecteur de valeur maximale, qui détecte la pression de freinage pour laquelle la roue a tendance à se bloquer.

6. Procédé pour l'adaptation de la performance de freinage à des conditions momentanées de roue-chaussée-adhérence dans un véhicule automobile avec un système de freinage selon l'une quelconque des revendications précédentes, qui comprend les étapes suivantes:
- transmission d'un signal de freinage d'un dispositif d'actionnement (11) à une soupape de freinage (1) pour ouvrir la soupape de freinage (1) selon la grandeur du signal de freinage,
- détecter la vitesse de rotation de chaque roue (12, 13) du véhicule automobile,
- fermer la soupape de freinage (1) lorsque l'accélération angulaire de la roue (12, 13) dépasse une valeur limite prédéterminée, de façon à éviter un blocage de la roue,
- déterminer l'évolution de roue-chaussée-adhérence en fonction du patinage au moyen d'une unité de reconnaissance (7), qui distingue entre un état de chaussée avec un bas coefficient de frottement et un état de chaussée avec un haut coefficient de frottement, et
- envoyer un signal d'adhérence à une unité de commutation (6),
**caractérisé en ce que**, en fonction du signal d'adhérence, l'unité de commutation (6) autorise une activation du système antiblocage avec une régulation de la pression de freinage en cas de haut coefficient de frottement, passe au contraire en cas de bas coefficient de frottement dans un état de surrégulation dans lequel la régulation est mise hors service par le système antiblocage, dans lequel, dans l'état de surrégulation, une valeur de consigne du patinage accrue par rapport au patinage maximal admissible du système antiblocage est réglée avec une pression de freinage simultanément accrue.

7. Procédé selon la revendication 6, **caractérisé en ce que** la détermination de roue-chaussée-adhérence est effectuée par la détermination de la pente de la courbe couple moteur - patinage.

8. Procédé selon la revendication 6 ou 7, **caractérisé en ce que** la détermination de roue-chaussée-adhérence lors d'un freinage est effectuée par la détermination de la pression de freinage pour laquelle la roue se bloque et/ou le système antiblocage est activé.

9. Procédé selon l'une quelconque des revendications 6 à 8, **caractérisé en ce que** la détermination de roue-chaussée-adhérence lors d'un freinage est effectuée par la détermination du mouvement de lacet du véhicule en cas de freinage latéralement différent.

10. Procédé selon la revendication 9, **caractérisé en ce que** l'on détecte l'angle de braquage du volant pour déterminer le mouvement de lacet dû à un freinage latéralement différent.
